# EUROPÄISCHE PATENTSCHRIFT

(11) **EP 3 211 109 B1**
(45) Veröffentlichungstag und Bekanntmachung des Hinweises auf die Patenterteilung: **10.06.2020**
(21) Anmeldenummer: 17157003.9
(22) Anmeldetag: 20.02.2017
(51) Int. Cl.: C22C 38/00, C22C 38/02, C22C 38/04, C22C 38/06, C22C 38/08, C22C 38/12, C22C 38/44, C22C 38/46, B22F 3/105, B22F 7/08, B23K 35/30, B23K 26/32, B23K 35/02, B29C 33/38, B32B 15/01, B23K 26/342, C21D 1/18, C22C 33/02, C21D 1/673, B23K 26/00

(54) **VERFAHREN ZUR HERSTELLUNG EINES WARMFORMWERKZEUGES UND WARMFORMWERKZEUG HIERAUS**
METHOD FOR PRODUCING A THERMOFORMING TOOL AND THERMOFORMING TOOL MADE FROM SAME
PROCÉDÉ DE FABRICATION D'UN MOULE DE FORMAGE À CHAUD ET MOULE FORMAGE À CHAUD AINSI OBTENU

(30) Priorität: 24.02.2016 DE 102016103283
(43) Veröffentlichungstag der Anmeldung: 30.08.2017
(73) Patentinhaber: Buderus Edelstahl Gmbh, 35576 Wetzlar (DE); voestalpine eifeler Lasertechnik GmbH, 38239 Salzgitter (DE)
(72) Erfinder: VETTER, Peter, 35789 Weilmünster (DE)
(74) Vertreter: HGF Europe LLP

(56) Entgegenhaltungen:
- EP-A1- 0 431 557
- EP-B1- 1 251 187
- DE-B4-102010 025 950
- US-A- 5 645 794

## Beschreibung

Um den Werkstoff Stahl insbesondere im Automobilbereich in seiner Konkurrenzfähigkeit zu anderen Materialien zu steigern und die Variabilität des Werkstoffs Stahl zu erhöhen, wurden in der Vergangenheit viele Anstrengungen unternommen.

Eine der erfolgreichsten Anstrengungen, um den Werkstoff Stahl im Karosseriebau preislich wie auch von den Materialeigenschaften her attraktiv zu machen, sind das so genannte Presshärten oder Formhärten.

Beim Presshärten wird aus einem Stahlblechband einer Stahlblechplatine ausgestanzt und diese ebene Platine auf eine Temperatur, üblicherweise größer Ac₃ aufgeheizt und anschließend in einem Warmformwerkzeug in einem einzigen Umformschritt zu dem gewünschten Bauteil umgeformt. Hierbei wird zudem die in der Blechplatine vorhandene Wärme mit einer Geschwindigkeit üblicherweise größer als 20 K/s, nämlich der so genannten kritischen Härtegeschwindigkeit, in das Formwerkzeug abgeführt und dadurch eine Härtung herbeigeführt. Das austenitische Hochtemperaturgefüge wird hierbei in ein überwiegend martensitisches Gefüge überführt.

Es ist bekannt, derartige Blechplatinen auch mit einer metallischen Beschichtung, und insbesondere einer Aluminium-Silizium- oder einer Zinkbeschichtung zu versehen.

Beim Formhärten wird aus einem Stahlblechband eine Stahlblechplatine ausgestanzt und die ausgestanzte Stahlblechplatine anschließend in einem üblichen, insbesondere mehrstufigen Umformprozess kalt umgeformt.

Das kaltumgeformte Bauteil wird hierbei anschließend auf die Austenitisierungstemperatur, d.h. eine Temperatur oberhalb Ac₃ aufgeheizt und anschließend in ein Formhärtewerkzeug eingelegt, wobei das Formhärtewerkzeug die Kontur des fertigen Bauteils besitzt. Hierzu wird insbesondere das kalt vorgeformte Bauteil in allen Raumrichtungen etwas kleiner hergestellt, um die Wärmedehnung beim Austenitisieren zu berücksichtigen, so dass das heiße Bauteil vorzugsweise die Abmessungen auch des endgültigen Bauteils und damit auch der Kontur des Warmformwerkzeugs besitzt.

Nach dem Einlegen des austenisitisierten kalt vorgeformten Bauteils in das Formhärtewerkzeug wird das Formhärtewerkzeug geschlossen, so dass das Formhärtewerkzeug vorzugsweise formschlüssig an dem austenitisierten Bauteil anliegt, so dass ein Wärmefluss zwischen dem Bauteil und dem Formhärtewerkzeug entsteht, bei dem die Abkühlung des Werkstücks mit einer Geschwindigkeit über der kritischen Härtegeschwindigkeit von mindestens 20 K/s stattfindet.

Derartige Warmformwerkzeuge oder Formhärtewerkzeuge sind thermisch hochbelastete Bauteile, die im Falle des Warmformwerkzeuges zudem noch eine hohe abrasive und mechanische Belastung erfahren.

Dem entsprechend müssen derartige Werkzeuge über eine hohe Wärmeleitfähigkeit, über eine hohe Temperaturleitfähigkeit, über eine hohe Zähigkeit und Härte verfügen.

Die genannten Werkstoffeigenschaften müssen als Gesamtkompromiss angesehen werden, da Eigenschaften, wie Härte und Zähigkeit, nicht gemeinsam maximierbar sind.

Aus der EP 2 236 639 B1 ist ein Warmarbeitsstahl bekannt, der über eine herausragende Härtung und Wärmeleitfähigkeit verfügen soll. Dieser Stahl wird durch eine allgemeine Analyse beschrieben, die aber sehr unscharf ist, wobei ein Kohlenstoffäquivalent angegeben wird sowie der Gehalt von Molybdän und Wolfram ins Verhältnis gesetzt wird, wobei dies jedoch im Widerspruch zu der Analyse und der Beschreibung steht. Der entsprechend dieses Patents hergestellte Stahl erreicht auch in der Praxis nicht die versprochenen Eigenschaften.

Aus der CH 165893 ist eine Eisenlegierung, insbesondere für warm arbeitende Werkzeuge bekannt, insbesondere Gesenke, Spritzgussgesenkte, Walzdorne und andere Werkzeuge in Pressen und Matrizen. Diese Eigenlegierung soll eine bestimmte chromarme Zusammensetzung besitzen, wobei Molybdän und Vanadium Wolfram teilweise ersetzen sollen.

Aus der DE 746 189 ist eine Stahllegierung für warm arbeitende Werkzeuge bekannt, bei denen gegenüber bekannten Stählen der Wolframgehalt abgesenkt sein soll und ein Überzug aus metallischem Chrom vorhanden ist.

Aus der WO2008/017341 A1 ist ein Verfahren zur Einstellung der Wärmeleitfähigkeit eines Stahls, insbesondere eines Warmarbeitsstahles bekannt, wobei dieser Warmarbeitsstahl eine bestimmte Zusammensetzung besitzen soll und eine wesentlich höhere Wärmeleitfähigkeit, wobei jedoch nicht angegeben wird, wie diese genau erzielt werden soll.

Aus der DE 1 014 577 ist ein Verfahren zur Herstellung von Warmarbeitswerkzeugen unter Verwendung einer aushärtenden Stahllegierung bekannt, wobei daraus hergestellte Gegenstände sich besonders als Werkzeuge zur Warmverformung bei statischen Drücken eignen sollen und zudem von einfacher, verhältnismäßig günstiger Zusammensetzung sind, welche sich leicht vergüten lässt. Gegenüber Brandrissen und Bruch während des Betriebes sollen sie widerstandsfähig sein. Hierfür wird eine bestimmte Legierung ausgewählt, welche jedoch Wolfram, Chrom und Vanadium nur als Verunreinigung enthalten darf. Gegenüber einem 5%-igen Chromstahl sollen sich keine Risse bilden. Das Material wird hierbei ausgeschmiedet und auf eine Lösungstemperatur von 982 bis 1038°C, vorzugsweise 1005 bis 1015°C erhitzt und auf dieser Temperatur 15 bis 20 Minuten je ein Zoll Werkstoffdicke gehalten und anschließend mittels Luft abgeschreckt, darauf nachbearbeitet und kann dann in Betrieb genommen werden.

Aus der DE 195 08 947 A1 ist eine verschleißfeste, anlassbeständige und warmfeste Legierung bekannt, welche besonders hohe Molybdän- und Wolframgehalte besitzt und insbesondere für Warmarbeitswerkzeuge in der Warmumformtechnik verwendet werden soll. Dieses Material enthält jedoch nur 30% Eisen.

Aus der CH 481222 ist ein Warmarbeitsstahl mit guter Kalteinsenkbarkeit zur Herstellung von Werkzeugen bekannt, welcher über eine bestimmte Legierung verfügt und insgesamt Chrom-Molybdän-Vanadium legiert ist.

Aus der DE 43 21 433 C1 ist die Verwendung eines Warmarbeitsstahles bekannt, der über 2 bis 4% Chrom und 3,5 bis 7% Molybdän verfügt. Dieser soll über eine sehr hohe Wärmeleitfähigkeit verfügen.

Aus der DE 1 090 245 A ist die Verwendung eines Stahles für Warmarbeitswerkzeuge bekannt, welches bei einem relativ hohen Chromgehalt, wobei dieses Material einer Wärmebehandlung bei 900 bis 1200°C unterworfen wird, anschließend abgekühlt wird und bei 500 bis 750°C angelassen wird, so dass eine Härte von 30 bis 60 HRC erhalten wird.

Aus der DE 10 2010 025 950 B4 ist ein Warmumformwerkzeug mit verbesserter Verschleißfestigkeit und Verfahren zu dessen Herstellung bekannt. Hierbei wird das Umformwerkzeug durch Auftragsschweißen mit einer aus einem pulverförmigen Beschichtungsmaterial hergestellten Schutzschicht versehen, wobei diese Schutzschicht aus einer pulverförmigen Mischung, die mindestens zwei eisenhaltige Komponenten besitzt, auf das Umformwerkzeug aufgetragen und mittels eines Schweißstrahls, vorzugsweise eines Laserschweißstrahls, aufgeschmolzen wird. Die Schutzschicht soll 1 bis 6 mm, vorzugsweise 2 bis 4 mm stark sein. Die relativ dünne Schutzschicht des Umformwerkzeuges besitzt aufgrund ihrer Härte eine vergleichsweise schlechte Wärmeleitfähigkeit, während die Basis des Umformwerkzeuges, d.h. der Grundwerkstoff bezüglich der Schutzschicht weiterhin auf hohem Wärmeleitniveau liegt, so dass die Gesamtwärmeleitung befriedigend ist. Die Schutzschicht kann dabei einheitlich oder in mehreren Schichten aufgetragen werden, wobei bei einem mehrschichtigen Aufbau die Härte der einzelnen Schichten durch Einstellung der Legierungen zueinander variieren kann.

Aufgabe der Erfindung ist es, ein Warmumformwerkzeug weiter zu verbessern und insbesondere ein an die Anwendung angepasstes Material zur Verfügung zu stellen, welches günstiger ist.

Die Aufgabe wird mit einem Verfahren zur Herstellung von Warmumformwerkzeugen mit den Merkmalen des Anspruchs 1 gelöst.

Vorteilhafte Weiterbildungen sind in den Unteransprüchen gekennzeichnet.

Es ist eine weitere Aufgabe, ein Warmumformwerkzeug zur Verfügung zu stellen, welches auf den Anwendungsfall abgestimmt günstiger und effektiver ist.

Die Aufgabe wird mit einem Warmformwerkzeug mit den Merkmalen des Anspruchs 11 gelöst.

Erfindungsgemäß wurde herausgefunden, dass für die Anwendungsfälle des Formhärtens von zinkbeschichteten Karosserieblechen einerseits und für die Verarbeitung von unbeschichteten oder Aluminium-Silizium-beschichteten Blechen im Presshärteverfahren unterschiedliche Eigenschaften erfüllt werden müssen.

Es wurde überraschend festgestellt, dass ein Material, welches für vollkommen andere Verfahren verwendet wird, hier überraschend gute Vorteile hat.

Erfindungsgemäß wird ein Kunststoffformstahl, der eigentlich für die Metallverarbeitung eine viel zu duktile Oberfläche besitzt, eingesetzt.

So hat sich gezeigt, dass beim Formhärten von zinkbeschichteten Karosserieblechen, welche kalt vorgeformt wurden, ein Kunststoffformstahl mit einer 310 bis 355 HB betragende Oberflächenhärte ausreicht und darüber hinaus eine derart überraschend hohe Wärmeleitfähigkeit hat, dass dies für die Prozessführung vorteilhaft ist. Ein solcher Kunststoffformstahl ist erheblich günstiger als die üblicherweise angebotenen Warmumformwerkzeugstähle für Stahlbleche und kann im Lieferzustand bereits verarbeitet werden, während übliche Warmumformwerkzeugstähle i.d. Regel in einer externen Härterei noch einem Härten gefolgt von mindestens zwei Autanvorgängen unterzogen werden müssen. Dabei kann das verwendete Kunststoffformmaterial in einer Standardausführung für wenig belastete Werkzeuge, z.B. Werkzeugoberteile, verwendet werden und besitzt hier üblicherweise Kerbschlagzähigkeiten von um die 15 Joule.

Für höher belastete Werkzeuge werden vorvergütete Materialien verwendet, welche noch bei der Herstellung zur Verbesserung des Gefüges und den mechanischen Eigenschaften zwischengeglüht und erneut auf die genannte Oberflächenhärte vergütet werden. Hierdurch wird eine zusätzliche Kornfeinung erzielt und eine Kerbschlagzähigkeit von über 22 bis 23 Joule.

Es konnte festgestellt werden, dass ein solches Material für das indirekte Presshärteverfahren bezüglich der Oberflächenhärte vollkommen ausreichend ist, aber bezüglich der Wärmeleitfähigkeit deutliche Vorteile besitzt.

Die Wärmeleitfähigkeit dieses Kunststoffformmaterials war für den Fachmann in dieser Form nicht ersichtlich, da sie für die Herstellung von Kunststoffteilen im Spritzgussverfahren gar kein wirklich relevanter Parameter ist bzw. Wärmeleitfähigkeiten ausreichend sind, die viel geringer sind.

Es konnte zudem festgestellt werden, dass für die Verarbeitung von unbeschichteten oder Aluminium-Silizium-beschichteten Blechen im Presshärteverfahren, d.h. Härten und Umformen, das vorgenannte Material Vorteile besitzt. Hierbei wird das Material entsprechend der vorgenannten Darstellungen verarbeitet, jedoch vor dem Einsatz die Oberfläche mittels Laserauftragsschweißen gemäß der DE 10 2010 025 950 B4 mit einer ca. 2 mm dicken Schutzschicht versehen. Hierbei ergeben sich synergistische Effekte, die so nicht erwartbar waren. So hat sich ergeben, dass der Kunststoffformstahl selbst bei großflächigen Schweißungen, was bei Kunststoffformstählen gar nicht wichtig wäre, besonders gut schweißbar ist, d.h., in besonders guter Weise mit der Schutzschicht verschweißbar ist.

Darüber hinaus hat sich gezeigt, dass die hervorragende Wärmeleitfähigkeit in Verbindung mit der Grundhärte von 35 HRC einerseits eine gute Stützwirkung der harten Oberflächenschicht bewirkt und andererseits in besonders guter Weise die fehlende Wärmeleitfähigkeit der Schutzschicht durch die sehr hohe Wärmeleitfähigkeit des Grundmaterials kompensiert wird.

Die herausragenden mechanischen und thermischen Eigenschaften des beschichteten Materials werden noch dadurch verbessert, dass dieses Material aufgrund des im Vergleich zu marktüblichen Warmarbeitsstählen niedrigeren Grundpreises, selbst bei einer Laserbeschichtung, noch sehr günstig ist.

Als Grundmaterial für das Warmumformwerkzeug wird ein Kunststoffformstahl gemäß der EP 1 251 187 B1 verwendet, auf die ebenso wie auf die DE 10 2010 025 950 B4 voll inhaltlich bezuggenommen wird.

Die Erfindung wird anhand einer Zeichnung beispielhaft erläutert. Es zeigen dabei:

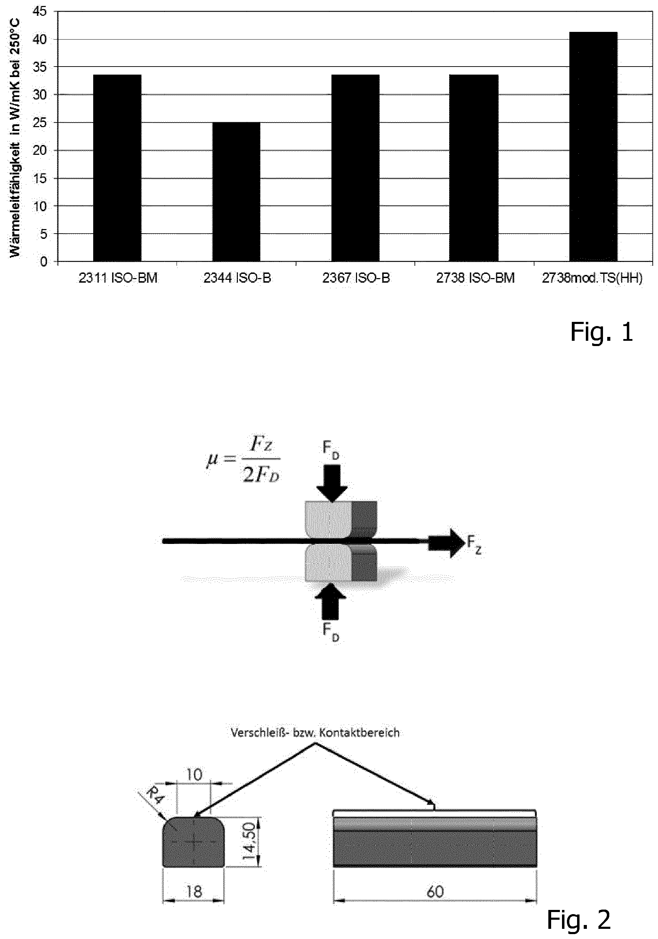

- Figur 1: einen Vergleich der Wärmeleitfähigkeit einiger Werkzeugstähle mit dem erfindungsgemäßen Warmumformwerkzeugstahl;
- Figur 2: den Versuchsaufbau eines Halbwertermittlungsversuchs,

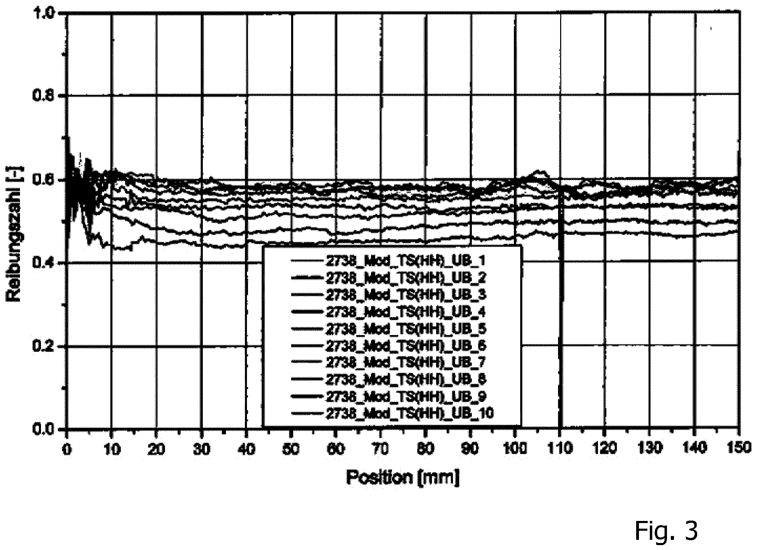

- Figur 3: die Reibwerte bei 10 Versuchen, wobei ein härtbarer Stahl mit einer unbeschichteten Blechoberfläche geprüft wurde;

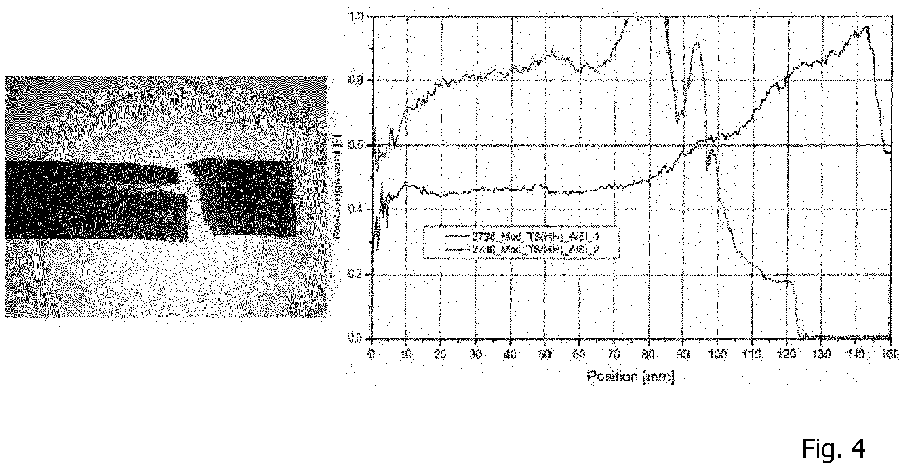

- Figur 4: die Reibwerte bei einer Aluminium-Siliziumbeschichteten Oberfläche des härtbaren Stahlblechs mit einem lasergehärteten erfindungsgemäßen Werkstoff;

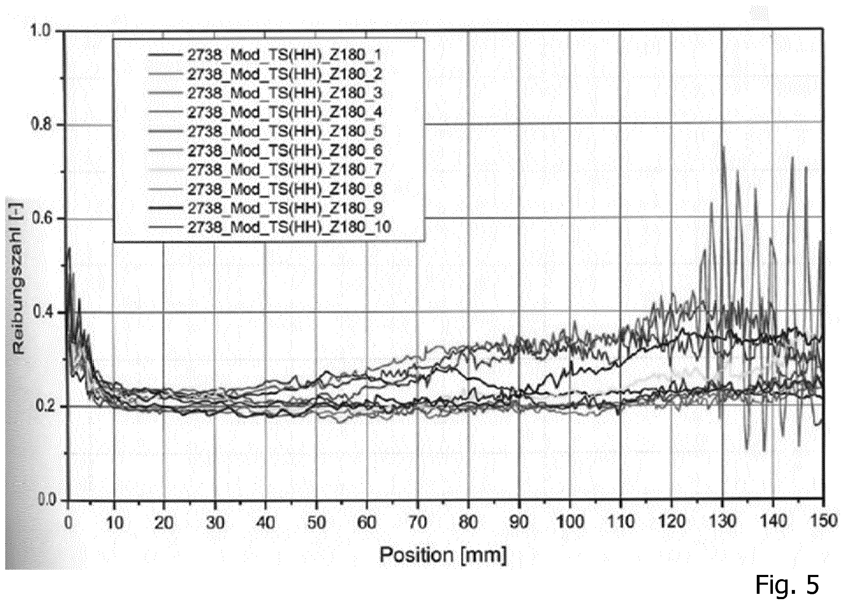

- Figur 5: die Reibwerte bei einer zinkbeschichteten Oberfläche des härtbaren Stahlblechs und einem lasergehärteten Werkstoff;

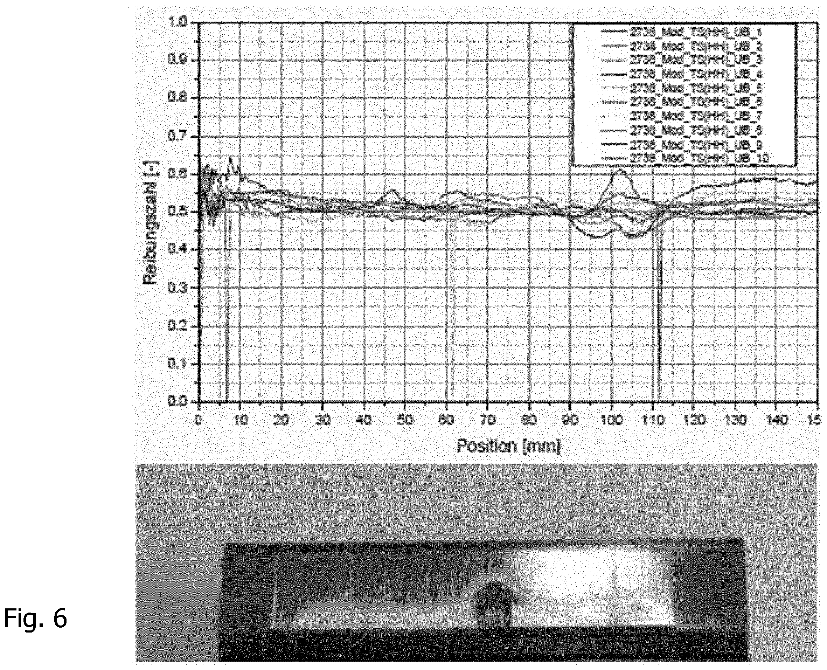

- Figur 6: die Reibwerte bei einem unbeschichteten härtbaren Stahlblech und einem erfindungsgemäßen Werkstoff der mit einer lasergeschweißten Schutzschicht versehen ist;

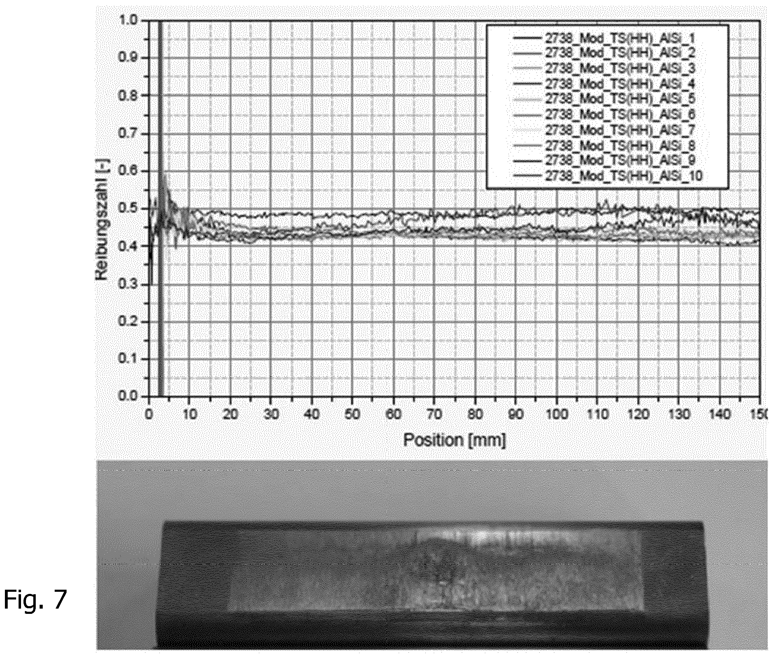

- Figur 7: die Reibwerte bei einem Werkstoff nach Figur 6 bei einer Aluminium-Silizium-beschichteten Oberfläche des härtbaren Stahlblechs;

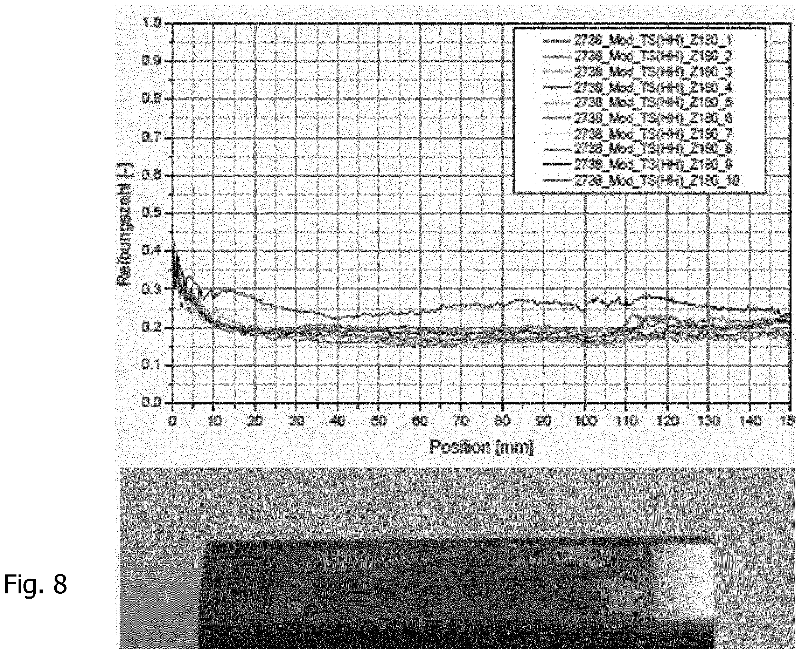

- Figur 8: die Reibwerte bei einem Werkstoff nach Figur 6 und einer zinkbeschichteten Blechoberfläche.
- Figur 9: das Gefüge eines einfach vergüteten Stahlmaterials
- Figur 10: das Gefüge eines zweifach vergüteten Stahlmaterials

Der erfindungsgemäß für Warmumformwerkzeuge verwendete Werkzeugstahl besitzt die folgende Zusammensetzung in Gewichtsprozent:
C = 0,25 - 0,30
Si = 0,04 - 0,20
Mn = 1,2 - 2,0
Cr = 1,0 - 2,0
Ni = 0,9 - 1,5
Mo = 0,3 - 0,8
V ≤ 0,2
Al = 0,01 - 0,03
S bis 0,15 wobei der Rest aus Eisen und unvermeidlichen Verunreinigungen besteht. Hierbei können auch hochreiner Schrott verwendet und Kleinstmengen auf die Höhe üblicher Verunreinigungen zulegiert werden.

Dieser Werkzeugstahl ist bewusst ohne Zugabe von Bor hergestellt, wobei die Härte, die unter der üblicher Warmumformzeugstähle liegt, durch den gezielt eingestellten Nickelgehalt erreicht wird. Das fehlende bzw. nur im Rahmen unvermeidlicher Verunreinigungen vorliegende Bor führt bei sorgfältig eingestelltem Nickelgehalt nicht zu Nachteilen bei den erreichbaren Härtewerten. Vorteilhaft ist jedoch, dass der Stahl gleichzeitig, insbesondere bei größeren Werkstückdurchmessern, bessere reproduzierbare Ergebnisse in Bezug auf seine Härtbarkeit bei geringerer Neigung zur Versprödung zeigt. Entsprechend ist es auch nicht notwendig, Titan zur Abschirmung des Bors vor Stickstoff zuzugeben.

Durch den vorgesehenen Gewichtsanteil an Molybdän zwischen 0,3% und 0,8%, vorzugsweise zwischen 0,4 und 0,6%, wird eine verbesserte Anlassbeständigkeit erreicht, so dass bei einem beispielhaften Werkstückdurchmesser von 1000 mm und einem beispielhaften Gehalt an Molybdän von 0,5 Gew.-% zum Erreichen von 30 HRC eine Anlasstemperatur von ca. 620°C verwendbar ist, während bekannte Stähle für die Kunststoffindustrie deutlich unter 600°C vergütet werden.

Der erfindungsgemäß als Warmarbeitsstahl verwendete Stahl ist ohne Spannungsrissgefahr in Wasser oder Polymer härtbar, weist nur geringe Seigerungen und einen hohen Reinheitsgrad auf und ist infolge der höheren Anlasstemperatur nach der Wärmebehandlung sehr homogen und eigenspannungsarm.

Zur Verbesserung der Schweißbarkeit kann ein Schwefelgehalt von bis zu 0,15 Gew.-% zugegeben werden. Im Regelfall wird man jedoch zur Sicherstellung eines hohen Reinheitsgrades bemüht sein, den Schwefelgehalt ebenso wie den Gehalt an Phosphor möglichst gering zu halten, beispielsweise Schwefel < 0,005% und/oder P < 0,02%. Bei der Verwendung des erfindungsgemäßen Stahls, insbesondere für die Beschichtung mit einem Legierungspulver und dem anschließenden Verschweißen, insbesondere mittels Laserstrahlschweißen, kann es jedoch vorteilhaft sein, den Schwefel entsprechend auf bis zu 0,15 Gew.-% einzustellen, während bei der Verwendung im indirekten Verfahren, also dem Formhärten, der Schwefelgehalt niedriger angesetzt sein kann.

Der Kohlenstoffgehalt ist gegenüber vergleichbaren Stählen soweit abgesenkt, dass Seigerungen minimiert werden und gleichzeitig eine Wasserhärtbarkeit gegeben ist (C max. 0,30%). Der Siliziumgehalt wird zur Minimierung der Blockseigerung auf einen Durchschnittswert von 0,1% abgesenkt wie auch der Chromgehalt von 2,0 auf 1,25%. Der Härtbarkeit fördernde Legierungsgehalt von Mangan liegt bei etwa 1,5%, während der Gehalt an Nickel, wie bereits ausgeführt, Bor obsolet macht und insbesondere auch die Gefahr der Bildung von Bornitriden entgegenwirkt.

Die gute Anlassbeständigkeit wird durch die höheren Zugaben von Molybdän (0,5% statt üblicherweise 0,2% bei 1.2738) und Vanadium (0,1% gegenüber 0% bei 1.2738) eingestellt.

Zur Herstellung dieses Stahls wird vorsortierter Schrott im Elektrolichtbogen (EAF) erschmolzen. Die Sekundärmetallurgie und insbesondere die genaue Legierungseinstellung wird im Pfannennofen (LF) inklusiv einer Kalziumbehandlung durchgeführt, wobei hierbei auch die chemische Zusammensetzung geprüft wird.

Anschließend wird die Schmelze einer Vakuumentgasung (VD) unterworfen und dann im steigenden Blockguss vergossen. Die erreichbaren Blockgewichte betragen hier ca. 3 bis 100 t.

Nach Wiedererwärmung werden die so erhaltenen Blöcke durch Freiformschmieden einer Umformung unterworfen und anschließend gegebenenfalls nach Abkühlung bei 880°C austenitisiert, d.h., auf eine Temperatur > Ac₃ für diese Stahllegierung unterworfen.

Der austenitisierte Werkstoff wird anschließend abgeschreckt, wobei die Abschreckung an Luft, alternativ Öl oder Polymer oder Wasser, erfolgt. Welche Kühlung vorgesehen wird, ist hierbei abmessungsabhängig und wird so gewählt, dass die gewünschte Gefügeeinstellung und Körnung erzielt wird.

Das austenitisierte und durch Abschreckung gehärtete Material wird zumindest einmal angelassen. Durch das Anlassen soll eine Oberflächenhärte von 310 bis 355 HB erzielt werden, wobei die Anlasstemperatur je nach Abkühlmedium und Abmessungen im Bereich von 570 bis 605°C liegen kann.

Nach einer Härteprüfung der Oberfläche und einer Ultraschallprüfung, gegebenenfalls einer Reinheitsgradprüfung und einer Verwechselungsprüfung, kann das Material entsprechend auf Lager gelegt werden.

In einer ersten Alternative des Materials für das Formhärten und insbesondere das Formhärten von verzinkten härtbaren Stahlblechen wird das Material, welches entsprechend der vorgenannten Verfahrensweise vorvergütet ist, auf Rohmaße gesägt und dann zur Verbesserung des Gefüges und der mechanischen Eigenschaften erneut geglüht und erneut vergütet. Durch diese erneute Vergütung kann eine Kornfeinung und eine Kerbschlagbiegezähigkeit von 22 Joule erreicht werden gegenüber 15 Joule des vorbeschriebenen Materials. Hierdurch erfolgt eine Härtung auf 310 bis 355 HB, die Obergrenze liegt bei 325 bis 355 HB bei schneller Luftabkühlung und einer Anlasstemperatur von 590°C. Um aus diesem doppelt vergüteten Material die entsprechenden Werkzeuge herzustellen, werden die Stahlblöcke zu Formbacken verarbeitet, d.h., es werden Kühlkanäle gebohrt und die Kontur gefräst und die Oberfläche geschliffen.

Für die Verwendung des Materials im Presshärten, d.h. im direkten Verfahren und insbesondere zum Presshärten von unbeschichteten und Aluminium-Silizium-beschichteten Blechen wird auf das einfach vergütete Material mittels Laserauftragsschweißung eine harte Schicht aufgebracht. Um hier eine besonders gute Schweißbarkeit zu gewährleisten, kann die Verschweißung unter Vorwärmung des Grundmaterials stattfinden.

Hierzu wird eine aus mindestens zwei eisenhaltigen Komponenten (Legierungen) zusammengesetzte pulverförmige Mischung auf das fertig konfigurierte Umformwerkzeug aufgetragen und mittels eines Schweißstrahls, vorzugsweise Laserschweißstrahls, aufgeschmolzen.

Eine erste der mindestens zwei eisenhaltigen Komponenten besitzt folgende Zusammensetzung:
C = 0,2 bis 0,8 Gew.-%
Cr = 2,0 bis 9,0 Gew.-%
Mo = 1,0 bis 5,0 Gew.-%
W = 0,5 bis 5,0 Gew.-%
V = 0,2 bis 2,0 Gew.-%

Rest Eisen und unvermeidbare Verunreinigungen. Hierbei können auch hochreiner Schrott verwendet und Kleinstmengen auf die Höhe üblicher Verunreinigungen zulegiert werden.

Die zweite der mindestens zwei eisenhaltigen Komponenten besitzt folgende Zusammensetzung:
C = 0,005 bis 0,2 Gew.-%
Cr = 10,0 bis 20,0 Gew.%
Mo = 0,5 bis 3,5 Gew.-%
Ni = 5,0 bis 15,0 Gew.-%
Si = 0,5 bis 3,5 Gew.-%

Rest Eisen und unvermeidbare Verunreinigungen.

Die Auftragsmenge der mindestens einen pulverförmigen Mischung wird so eingestellt, dass die Dicke der fertigen Schutzschicht im Bereich von 1 bis 6 mm, vorzugsweise im Bereich von 2 bis 4 mm liegt.

Die Schicht wird durch ein Pulverauftragsschweißverfahren, vorzugsweise ein Laserpulverauftragsschweißverfahren, mit dem erfindungsgemäß verwendeten Werkzeug und Werkstoff erzeugt und verbunden. Auf diese Weise wird eine harte, relativ dünne, gleichmäßige Schutzschicht erzielt. Die relativ dünne Schutzschicht des Umformwerkzeuges besitzt aufgrund ihrer Härte/Legierung eine vergleichsweise schlechte Wärmeleitfähigkeit, während die Basis des Umformwerkzeuges, d.h., der erfindungsgemäß verwendete Grundwerkstoff, ein höheres Wärmeleitniveau besitzt als bekannte, hierfür verwendete Stahlwerkstoffe. Somit kann eine Kompensation der schlechten Wärmeleitfähigkeit erfolgen.

Die Härte und die Zähigkeit der Schutzschicht des erfindungsgemäßen Warmumformwerkzeuges sind durch den aufgeschweißten Zusatzwerkstoff, also das Pulvergemisch, einstellbar.

Bezüglich der Eigenschaften der unterschiedlichen pulverisierten Legierungen und der einzelnen Legierungsbestandteile wird auf die DE 10 2010 025 950 B4 verwiesen.

Die Härte der erzeugten Schutzschicht hängt vom Mischungsverhältnis der beiden Komponenten ab. Um eine hohe Verschleißfestigkeit zu erreichen, wird eine Härte im Bereich von 56 bis 64 HRC im Gegensatz zu maximal 35 HRC des Basiswerkstoffs eingestellt. Besonders bevorzugt wird diese Härte auf 60 bis 64 HRC eingestellt. Die Härte bzw. Verschleißfestigkeit der erfindungsgemäß mit dem Grundwerkstoff gemeinsam agierenden Schutzschicht ist optimal, wenn die erste Komponente und die zweite Komponente der mindestens zwei eisenhaltigen Komponenten in einem Mischungsverhältnis im Bereich von 30:70 bis 70:30, vorzugsweise im Bereich von 40:60 bis 60:40 gemischt werden.

Die Schicht kann hierbei auch aus mehreren unterschiedlich harten Schichten aufgebaut werden, wobei vorzugsweise die oberste Schicht die härteste Schicht ist und die Härte sukzessiv nach unten zum Basiswerkstoff hin abnimmt.

Die Erfindung wird anhand eines Beispiels erläutert:
Ein Stahl der folgenden chemischen Zusammensetzung in Masse-%:
C = 0,25
Si = 0,14
Mn = 1,47
P = 0,007
S = 0,002
Cr = 1,23
Ni = 1,02
Mo = 0,49
V = 0,10

Rest Eisen und die schmelzungsbedingte Verunreinigung wird wie bereits ausgeführt erschmolzen. Hierbei kann auch die Verwendung von hochreinem Schrott verwendet und Kleinstmengen auf die Höhe üblicher Verunreinigungen zugeführt werden.

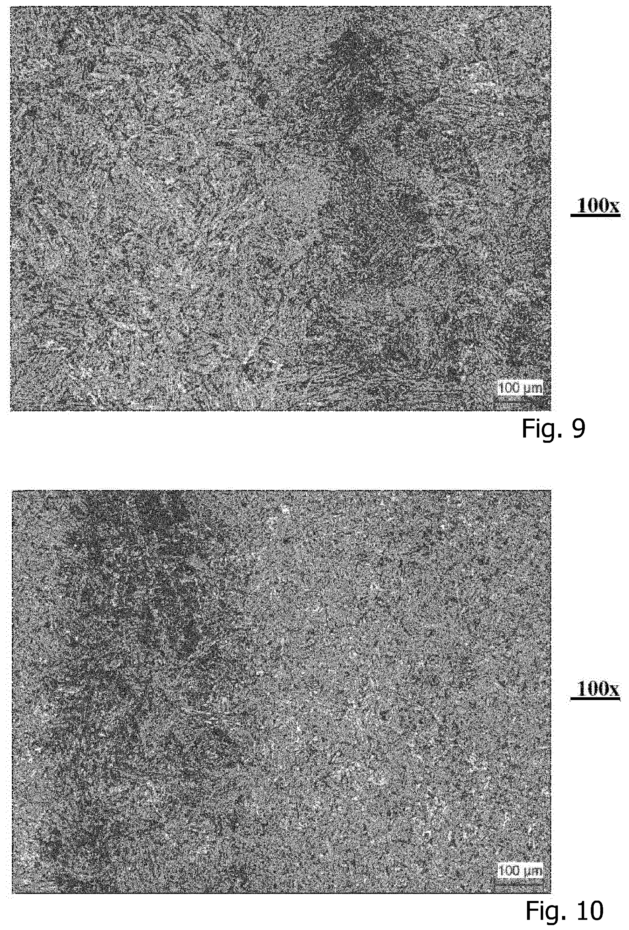

Bei dem einfach vergüteten Material ergibt sich ein bainitisches Vergütungsgefüge mit einer Korngröße von 2 bis 6 (Figur 9) .

Das doppelt vergütete Material besitzt ein bainitisches Vergütungsgefüge mit Korngrößen nach DIN EN ISO 643 von 4 bis 7 entsprechend Figur 10.

Die beiden Materialvarianten werden einer Härteprüfung HBW 10/3000 (DIN EN ISO 6506-1:2006-03) unterworfen, wobei das Soll bei 310 bis 355 HB liegt.

Die Prüfung in einer stationären Brinellprüfanlage ergibt für die einfach vergütete Variante eine Härte von 328 HB und für die doppelt vergütete Variante eine Härte von 313 HB.

Anschließend werden die beiden Werkstoffe einer Kerbschlagbiegeuntersuchung durchgeführt entsprechend einem Kerbschlagbiegeversuch (DIN EN ISO 148-3:2011).

Bei dem einfach vergüteten Material wurde längs zur Faserrichtung bei drei Versuchen eine Kerbschlagzähigkeit von 16, 15 und 17 Joule ermittelt, so dass der Mittelwert 16 Joule beträgt. Quer zur Faserrichtung wurden 13, 17 und 17 Joule ermittelt, so dass der Mittelwert 16 Joule beträgt.

Bei dem doppelt vergüteten Material wurden 23, 38 und 34 Joule entsprechend einem Mittelwert von 32 Joule erzielt.

Quer zur Faserrichtung wurden beim doppelt vergüteten Material 21, 28 und 31 Joule erzielt, was einem Mittelwert von 27 Joule entspricht.

Hiermit ist gezeigt, dass eine erneute zweite Vergütebehandlung auf die Werkstoffeigenschaften einen maßgeblichen Einfluss hat. Das erfindungsgemäß verwendete Material, welches eigentlich ein Kunststoffformstahl ist, zeigt durch die doppelte Vergütung eine bemerkenswerte Kerbschlagzähigkeit, die sogar über der Kerbschlagzähigkeit vergleichbarer Warmumformstähle für den Presshärtebereich liegt und so völlig überraschend, trotz einer etwas niedrigeren Härte, eine absolut ausreichende Materialeigenschaft bei deutlich günstigerem Werkstoff besitzt. Hierbei ist die Härte für das Formhärten absolut ausreichend, so dass der erfindungsgemäß verwendete Werkstoff beim Formhärten gute Ergebnisse zeigt.

Für die Verwendung im Presshärteverfahren muss eine doppelte Vergütung nicht vorgesehen werden, anstelle der doppelten Vergütung wird nach dem Erstellen der Formenhälfte und der entsprechenden Kontur mittels Laserauftragsschweißen eine Schutzschicht aufgeschweißt.

Bei der Erfindung ist von Vorteil, dass ein günstiger, für diese Verwendung gar nicht vorgesehener Werkstoff durch eine doppelte Vergütung so ertüchtigt werden kann, dass bei günstigerem Werkstoff bessere Eigenschaften als bei herkömmlichen, bekannten Werkstoffen für diese Anwendung erzielt werden.

Bei einer besonders großen notwendigen Härte, wie für das Presshärten, kann vorteilhafterweise auf den einfach vergüteten Werkstoff zurückgegriffen werden, der in besserer Weise schweißbar ist als herkömmliche, hierfür verwendete Werkstoffe und zudem so günstig ist, dass das anschließende Laserauftragsschweißen durch den günstigen Preis kompensiert wird. Zudem ist die Wärmeleitfähigkeit deutlich besser als bei herkömmlichen, hierfür verwendeten Werkstoffen, so dass die verringerte Wärmeleitfähigkeit der Schutzschicht durch die hohe Wärmeleitfähigkeit des Grundmaterials teilkompensiert wird.

## Patentansprüche

1. Verfahren zum Herstellen eines Warmformwerkzeuges zum Formhärten oder Presshärten von härtbaren Stahlblechen oder Stahlblechbauteilen, wobei ein Stahl erschmolzen wird und anschließend in einem Pfannenofen sekundärmetallurgisch behandelt wird, und die folgende Zusammensetzung in Gewichts-%:
C = 0,25 bis 0,30
Si = 0,04 bis 0,20
Mn = 1,2 bis 2,0
Cr = 1,0 bis 2,0
Ni = 0,9 bis 1,5
Mo = 0,3 bis 0,8
V ≤ 0,2
Al = 0,01 bis 0,03,
S bis 0,15
der Rest bestehend aus Eisen und unvermeidbaren Verunreinigungen aufweist, wobei eine Vakuumentgasung nachfolgt und hieraus Blöcke gegossen werden, wobei die Blöcke anschließend warm umgeformt werden, und die umgeformten Formate anschließend austenitisiert >AC₃ und anschließend abgeschreckt werden, so dass sich ein im Wesentlichen bainitisches Gefüge ergibt und wobei die Blöcke anschließend angelassen werden, wobei der so erhaltene Werkstoff anschließend entweder
ein zweites Mal wärmebehandelt wird, wobei zur Kornfeinung und
zur Erzielung einer Kerbschlagzähigkeit nach DIN EN ISO 148-3:2011 von ≥ 20 Joule der Werkstoff erneut austenitisiert wird, gefolgt von einer Abschreckung und einem Anlassen bei 570°C bis 605°C
oder
der Werkstoff auf eine gewünschte Endabmessung gebracht und anschließend zumindestens eine Formkontur zum Formen des Bleches oder des Werkstücks herausgearbeitet und entsprechend oberflächenbearbeitet wird und auf die so erhaltene werkstückseitige Fläche eine Schutzschicht aufgeschweißt wird, die härter als der Grundwerkstoff ist, wobei die Schutzschicht im Pulverauftragsschweißverfahren und insbesondere im Laserpulverauftragsschweißverfahren aufgebracht wird und als aufzuschweißendes Pulver ein Pulver verwendet wird, das aus mindestens zwei eisenhaltigen Komponenten oder Legierungen zusammengesetzt ist, welche auf das Werkstück aufgebracht und mittels Laserschweißstrahls oder Pulverauftragsschweißen dort verschweißt und aufgeschmolzen wird, wobei eine erste der mindestens zwei eisenhaltigen Komponenten folgende Zusammensetzung in Gewichts-% besitzt:
C = 0,2 bis 0,8
Cr = 2,0 bis 9,0
Mo = 1,0 bis 5,0
W = 0,5 bis 5,0
V = 0,2 bis 2,0,
Rest Eisen und unvermeidbare schmelzungsbedingte Verunreinigungen, wobei die zweite der mindestens zwei eisenhaltigen Komponenten oder Legierungen folgende Zusammensetzung in Gewichts-% besitzt:
C = 0,005 bis 0,2
Cr = 10,0 bis 20,0
Mo = 0,5 bis 3,5
Ni = 5,0 bis 15,0
Si = 0,5 bis 3,5,
Rest Eisen und unvermeidbare Verunreinigungen.

2. Verfahren nach Anspruch 1, **dadurch gekennzeichnet, dass** die Austenitisierung oberhalb der Austenitisierungstemperatur AC₃ und insbesondere bei 860 bis 900°C Werkstücktemperatur erfolgt.

3. Verfahren nach Anspruch 1 oder 2, **dadurch gekennzeichnet, dass** vor der Austenitisierung der zweiten Wärmebehandlung der Werkstoff bei 700°C bis 740°C geglüht wird.

4. Verfahren nach einem der vorhergehenden Ansprüche, **dadurch gekennzeichnet, dass** die Warmumformung durch Freiformschmieden erfolgt.

5. Verfahren nach einem der vorhergehenden Ansprüche, **dadurch gekennzeichnet, dass** das Material auf einer Oberflächenhärte von 310 bis 355 HBW 10/3000 nach DIN ISO 6506-1:2006-03 angelassen wird.

6. Verfahren nach einem der vorhergehenden Ansprüche, **dadurch gekennzeichnet, dass** die Auftragsmenge des Pulvers so eingestellt wird, dass die Dicke der fertig erschmolzenen und aufgeschweißten Schutzschicht im Bereich von 1 bis 6 mm, vorzugsweise im Bereich von 2 bis 4 mm liegt.

7. Verfahren nach einem der vorhergehenden Ansprüche, **dadurch gekennzeichnet, dass** der Grundwerkstoff vor dem Laserauftragsschweißen vorgewärmt wird.

8. Verfahren nach einem der vorhergehenden Ansprüche, **dadurch gekennzeichnet, dass** die beiden eisenhaltigen Komponenten (Legierungen) im Verhältnis 30:70 bis 70:30, vorzugsweise 40:60 bis 60:40 gemischt werden.

9. Verfahren nach einem der vorhergehenden Ansprüche, **dadurch gekennzeichnet, dass** die Schutzschicht aus einer oder mehreren Schichten mit unterschiedlichen Zusammensetzungen, die nacheinander aufgebracht und aufgeschweißt sind, ausgebildet wird.

10. Verfahren nach einem der vorhergehenden Ansprüche, **dadurch gekennzeichnet, dass** beim Erschmelzen hochreiner Schrott verwendet wird und/oder Kleinstmengen von Elementen auf die Höhe üblicher Verunreinigungen zulegiert werden.

11. Warmumformwerkzeug zum Presshärten oder Formhärten von Blechen oder geformten Blechbauteilen aus einer härtbaren Stahllegierung, wobei das Warmumformwerkzeug eine Zusammensetzung in Gewichts-% von
C = 0,25 bis 0,30
Si = 0,04 bis 0,20
Mn = 1,2 bis 2,0
Cr = 1,0 bis 2,0
Ni = 0,9 bis 1,5
Mo = 0,3 bis 0,8
V ≤ 0,2
Al = 0,01 bis 0,03,
S bis 0,15
der Rest bestehend aus Eisen und unvermeidbaren Verunreinigungen aufweist,wobei
das Werkzeug nach einer zweiten Austenitisierung gefolgt von einer Abschreckung und einem Anlassen bei 570-605 °C eine Kerbschlagzähigkeit nach DIN EN ISO 148-3:2011 von > 20 Joule besitzt oder das Warmumformwerkzeug eine Schutzschicht besitzt, welche auf das Werkstück mittels Laserschweißstrahl oder Pulverauftragsschweißen aufgebracht ist.

12. Verwendung eines Stahles mit der folgenden Zusammensetzung in Gewichts-%:
C = 0,25 bis 0,3
Si = 0,04 bis 0,20
Mn = 1,2 bis 2,0
Cr = 1,0 bis 2,0
Ni = 0,9 bis 1,5
Mo = 0,3 bis 0,8
V<0,2
Al = 0,01 bis 0,03,
S bis 0,15
Rest Eisen und erschmelzungsbedingte Verunreinigungen für ein Verfahren nach einem der Ansprüche 1 bis 10 und insbesondere zur Herstellung von Warmformwerkzeugen für das Presshärten oder Formhärten.

## Claims

1. A method of producing a hot-forming tool for the mold-hardening or press-hardening of hardenable steel sheets or sheet steel components, wherein a steel is smelted and then subjected to a secondary metallurgical treatment in a ladle furnace, said steel having the following composition in % by weight:
C = 0.25 to 0.30
Si = 0.04 to 0.20
Mn = 1.2 to 2.0
Cr = 1.0 to 2.0
Ni = 0.9 to 1.5
Mo = 0.3 to 0.8
V ≤ 0.2
Al = 0.01 to 0.03
S up to 0.15,
the balance consisting of iron and unavoidable impurities, wherein a vacuum degassing process follows and ingots are cast therefrom, wherein the ingots are subsequently hot-formed, and the formed formats are subsequently austenitized at >AC₃ and then quenched so that a substantially bainitic structure is obtained, and wherein the ingots are subsequently tempered, the material thus obtained being subsequently either heat-treated a second time, wherein, for grain refinement and to achieve an impact strength according to DIN EN ISO 148-3:2011 of ≥ 20 Joule, the material is austenitized again, followed by quenching and tempering at 570°C to 605°C,
or
the material is brought to a desired final dimension and then at least one shaped contour to form the metal sheet or workpiece is machined and is surface-treated accordingly, and a protective layer which is harder than the base material is welded onto the workpiece-side surface thus obtained, the protective layer being applied by a powder deposition welding process and in particular by a laser powder deposition welding process, and a powder being used as the powder to be applied by welding which is composed of at least two iron-containing components or alloys which are applied to the workpiece and welded and melted there by means of a laser welding beam or powder deposition welding, the first one of the at least two iron-containing components having the following composition in % by weight:
C = 0.2 to 0.8
Cr = 2.0 to 9.0
Mo = 1.0 to 5.0
W = 0.5 to 5.0
V = 0.2 to 2.0,
the balance being iron and unavoidable impurities due to smelting, the second one of the at least two iron-containing components or alloys having the following composition in % by weight:
C = 0.005 to 0.2
Cr = 10.0 to 20.0
Mo = 0.5 to 3.5
Ni = 5.0 to 15.0
Si = 0.5 to 3.5,
the balance being iron and unavoidable impurities.

2. The method according to claim 1, **characterized in that** the austenitization takes place above the austenitization temperature AC₃ and in particular with a workpiece temperature from 860 to 900°C.

3. The method according to claim 1 or 2, **characterized in that** the material is annealed at 700°C to 740°C prior to the austenitization of the second heat treatment.

4. The method according to any of the preceding claims, **characterized in that** the hot-forming process is carried out by open-die forging.

5. The method according to any of the preceding claims, **characterized in that** the material is tempered so as to have a surface hardness from 310 to 355 HBW 10/3000 according to DIN ISO 6506-1:2006-03.

6. The method according to any of the preceding claims, **characterized in that** the quantity of powder applied is adjusted such that the thickness of the finished molten and welded-on protective layer is in the range from 1 to 6 mm, preferably in the range from 2 to 4 mm.

7. The method according to any of the preceding claims, **characterized in that** the base material is preheated before the laser deposition welding.

8. The method according to any of the preceding claims, **characterized in that** the two iron-containing components (alloys) are mixed in a ratio of 30:70 to 70:30, preferably 40:60 to 60:40.

9. The method according to any of the preceding claims, **characterized in that** the protective layer is formed from one or more layers of different compositions, which are applied and welded on successively.

10. The method according to any of the preceding claims, **characterized in that** high purity scrap is used in the smelting process and/or very small amounts of elements are added by alloying to the level of common impurities.

11. A hot-forming tool for press-hardening or mold-hardening of metal sheets or shaped sheet metal components made of a hardenable steel alloy, the hot-forming tool having a composition in % by weight of
C = 0.25 to 0.30
Si = 0.04 to 0.20
Mn = 1.2 to 2.0
Cr = 1.0 to 2.0
Ni = 0.9 to 1.5
Mo = 0.3 to 0.8
V ≤ 0.2
Al = 0.01 to 0.03
S to 0.15,
the balance consisting of iron and unavoidable impurities, wherein
the tool, after a second austenitization followed by quenching and tempering at 570-605 °C, has an impact strength according to DIN EN ISO 148-3:2011 of > 20 Joule or the hot-forming tool has a protective layer which is applied onto the workpiece by means of a laser welding beam or powder deposition welding.

12. Use of a steel having the following composition in % by weight:
C = 0.25 to 0.3
Si = 0.04 to 0.20
Mn = 1.2 to 2.0
Cr = 1.0 to 2.0
Ni = 0.9 to 1.5
Mo = 0.3 to 0.8
V < 0.2
Al = 0.01 to 0.03
S up to 0.15,
the balance being iron and impurities due to smelting, for a method according to any of claims 1 to 10 and in particular for the manufacture of hot-forming tools for press-hardening or mold-hardening.

## Revendications

1. Procédé de fabrication d'un outil de formage à chaud pour la trempe par formage ou trempe sous presse de tôles d'acier ou composants de tôle d'acier trempables, sachant qu'un acier est mis en fusion et ensuite traité par métallurgie secondaire dans un four-poche, et présente la composition suivante en % de poids :
C = 0,25 à 0,30
Si = 0,04 à 0,20
Mn = 1,2 à 2,0
Cr = 1,0 à 2,0
Ni = 0,9 à 1,5
Mo = 0,3 à 0,8
V ≤ 0,2
Al = 0,01 à 0,03,
S jusqu'à 0,15
le solde étant composé de fer et d'impuretés inévitables, sachant qu'un dégazage sous vide s'ensuit et des lingots sont coulés à partir de là, sachant que les lingots sont ensuite mis en forme à chaud, et les formats mis en forme sont ensuite austénitisés (>AC₃) et ensuite trempés de manière à donner une structure essentiellement bainitique et sachant que les lingots sont ensuite revenus, sachant que le matériau ainsi obtenu est ensuite
soit
traité thermiquement une deuxième fois, sachant que le matériau est de nouveau austénitisé pour affiner le grain et obtenir une résistance aux chocs sur éprouvette entaillée selon DIN EN ISO 148-3:201 de ≥ 20 joules, suivi par une trempe et un revenu à une température comprise entre 570 °C et 605 °C,
soit
le matériau est mis à une dimension finale souhaitée et ensuite au moins un contour de forme est élaboré pour former la tôle ou la pièce à fabriquer et soumis à un traitement de surface approprié et une couche de protection est soudée sur la face située côté pièce à fabriquer ainsi obtenue, la couche de protection étant plus dure que le matériau de base, sachant que la couche de protection est appliquée par procédé de soudage à la poudre et en particulier par procédé de soudage laser à la poudre, et une poudre composée d'au moins deux composants ou alliages à teneur en fer, lesquels sont appliqués sur la pièce à fabriquer et y sont soudés et fondus par jet de soudage laser ou soudage à la poudre, est utilisée comme poudre à souder, sachant qu'un premier des au moins deux composants à teneur en fer présente la composition suivante en % de poids :
C = 0,2 à 0,8
Cr = 2,0 à 9,0
Mo = 1,0 à 5,0
W = 0,5 à 5,0
V = 0,2 à 2,0,
le solde étant composé de fer et d'impuretés inévitables liées à la fusion, sachant que le deuxième des au moins deux composants ou alliages à teneur en fer présente la composition suivante en % de poids :
C = 0,005 à 0,2
Cr = 10,0 à 20,0
Mo = 0,5 à 3,5
Ni = 5,0 à 15,0
Si = 0,5 à 3,5,
le solde étant composé de fer et d'impuretés inévitables.

2. Procédé selon la revendication 1, **caractérisé en ce que** l'austénitisation est effectuée au-dessus de la température d'austénitisation AC₃ et en particulier à une température de pièce à fabriquer comprise entre 860 °C et 900 °C.

3. Procédé selon la revendication 1 ou 2, **caractérisé en ce que**, avant l'austénitisation du deuxième traitement thermique, le matériau est recuit à une température comprise entre 700 °C et 740 °C.

4. Procédé selon l'une des revendications précédentes, **caractérisé en ce que** la mise en forme à chaud s'effectue par forgeage libre.

5. Procédé selon l'une des revendications précédentes, **caractérisé en ce que** le matériau est revenu à une dureté de surface de 310 à 355 HBW 10/3000 selon DIN ISO 6506-1:2006-03.

6. Procédé selon l'une des revendications précédentes, **caractérisé en ce que** la quantité d'application de la poudre est ajustée de telle manière que l'épaisseur de la couche de protection fondue finie et soudée soit comprise dans la plage de 1 à 6 mm, de préférence dans la plage de 2 à 4 mm.

7. Procédé selon l'une des revendications précédentes, **caractérisé en ce que** le matériau de base est préchauffé avant le soudage laser.

8. Procédé selon l'une des revendications précédentes, **caractérisé en ce que** les deux composants (alliages) à teneur en fer sont mélangés dans un rapport de 30:70 à 70:30, de préférence 40:60 à 60:40.

9. Procédé selon l'une des revendications précédentes, **caractérisé en ce que** la couche de protection est constituée d'une ou de plusieurs couches de compositions différentes qui sont appliquées et soudées successivement.

10. Procédé selon l'une des revendications précédentes, **caractérisé en ce que**, lors de la fusion, de la ferraille ultrapure est utilisée et/ou des quantités minimales d'éléments sont adjoints à la hauteur d'impuretés habituelles.

11. Outil de formage à chaud pour la trempe par formage ou trempe sous presse de tôles ou composants de tôle formés composés d'un alliage d'acier trempable, sachant que l'outil de formage à chaud présente une composition en % de poids de
C = 0,25 à 0,30
Si = 0,04 à 0,20
Mn = 1,2 à 2,0
Cr = 1,0 à 2,0
Ni = 0,9 à 1,5
Mo = 0,3 à 0,8
V ≤ 0,2
Al = 0,01 à 0,03,
S jusqu'à 0,15
le solde étant composé de fer et d'impuretés inévitables, sachant que l'outil, après une deuxième austénitisation suivie par une trempe et un revenu à 570-605 °C, présente une résistance aux chocs sur éprouvette entaillée selon DIN EN ISO 148-3:2011 de > 20 joules ou l'outil de formage à chaud présente une couche de protection qui est appliquée sur la pièce à fabriquer par jet de soudage laser ou par soudage à la poudre.

12. Utilisation d'un acier présentant la composition suivante en % de poids :
C = 0,25 à 0,3
Si = 0,04 à 0,20
Mn = 1,2 à 2,0
Cr = 1,0 à 2,0
Ni = 0,9 à 1,5
Mo = 0,3 à 0,8
V < 0,2
Al = 0,01 à 0,03,
S jusqu'à 0,15
le solde étant composé de fer et d'impuretés liées à la fusion pour un procédé selon l'une des revendications 1 à 10 et en particulier pour la fabrication d'outils de formage à chaud pour la trempe sous presse ou trempe par formage.
